# EUROPEAN PATENT SPECIFICATION

(11) **EP 2 857 290 B1**
(45) Date of publication and mention of the grant of the patent: **12.07.2017**
(21) Application number: 13187198.0
(22) Date of filing: 03.10.2013
(51) Int. Cl.: B62D 25/12, B60R 21/38

(54) **Hinge arrangement**
Scharnieranordnung
Agencement de charnière

(43) Date of publication of application: 08.04.2015
(73) Proprietor: Volvo Car Corporation, 40531 Göteborg (SE)
(72) Inventor: Swahn, Martin, 43093 Hälsö (SE)
(74) Representative: Volvo Car Corporation

(56) References cited:
- EP-A1- 2 634 047
- DE-A1-102005 034 099

## Description

### TECHNICAL FIELD

The present disclosure relates to a hinge arrangement for a bonnet of a vehicle. The disclosure further relates to a bonnet arrangement and a vehicle comprising such a hinge arrangement.

### BACKGROUND

A vehicle, such as a car, is normally provided with a bonnet, which covers an engine compartment. The bonnet is connected to the vehicle by hinges, such that the bonnet can be opened in order to allow access to the engine compartment for maintenance and/or repair.

If the vehicle is involved in an accident, in which the front part of the vehicle hits a vulnerable road user, such as a pedestrian or bicyclist, it is not uncommon that the vulnerable road user is thrown onto the bonnet of the vehicle and that the head of the vulnerable road user impacts on the bonnet. In order to reduce the personal injuries, there is a desire, and in some countries also a legal requirement, that the hinges should be collapsible in such a situation.

In order to reduce the severity of these accidents, it is known to use a deployable bonnet, e.g. by raising the rear part of the bonnet to an "impact position", a so called deployed position or pop-up position, such that the distance between the bonnet and any hard engine parts is increased. The bonnet may be lifted to the deployed position by means of an inflatable member such as an airbag.

Further, if the vehicle is involved in a frontal collision, there is a risk that the bonnet will intrude into the windshield of the vehicle as a result of the collision forces. There is therefore a desire, and in some countries also a legal requirement, that the hinges should be strong enough to prevent the bonnet from intruding into the windshield. For a deployable bonnet, it is preferred that intrusion is prevented both for the bonnet being in a normal, closed position and in the deployed position. Legal requirements are for example given in FMVSS 219, Windshield Zone Intrusion, for the USA and EU Directive 2003/102/EC and 2004/90/EC for the EU.

When viewing the vehicle from the outside, the bonnet contributes to a great extent to the general impression. It is thus desirable that the bonnet looks aesthetically pleasing. According to prior art, in some cases the pivot axis providing the hinged connection of the bonnet is located below a flush-mating fender or vehicle body structure longitudinally behind the bonnet. Therefore, when lifting the bonnet, there is a risk of conflict between the bonnet and the flush-mating fender or vehicle body structure. According to prior art, this may be solved by using a clearance between the bonnet and the flush-mating fender or vehicle body structure, typically of 2-8 mm. If the pivot point of this prior art bonnet arrangement would be located more forward, the risk of conflict would be increased. The clearance may disturb the visual impression of the vehicle. In addition, there may be a risk of precipitation and/or dirt entering through the clearance.

A known drawback with hinge arrangements of many other prior art solutions is that they involve many different parts, which make them heavy and require large packaging volume, as well as making them expensive and difficult to mount in the vehicle at the production facility.

Document DE 10 2005 034 099 A1 relates to a hinge arrangement for a bonnet of a motor vehicle. The hinge arrangement has a triangular-shaped carrier mechanism attached to the bonnet, a joint provided on the carrier mechanism, and a hinge plate affixed to the vehicle body and including an elongate slot engaged with the joint. In operation, the joint is slid along the slot, in parallel to the vehicle length, from a backward bonnet closed position to a forward bonnet opened position. Then the carrier mechanism is pivoted relative to the joint to enable the bonnet to open or close.

Document EP 2 634 047 A1 relates to a hinge mechanism for a bonnet of a vehicle. In order to open the bonnet the second hinge member pivots in relation to the first hinge member about a pivot pin. As may be realized from the above, there is a desire for an improved hinge arrangement.

### SUMMARY OF INVENTION

The object of the present disclosure is to overcome or ameliorate at least one of the disadvantages of the prior art, or to provide a useful alternative.

It is desirable to provide a hinge arrangement, which is able to displace a hinge member attached to the bonnet relative to a hinge member attached to the body of the vehicle in a controlled and preselectable way.

It is further desirable to provide a hinge arrangement, which is appropriate from a safety point of view, for safety of users of the vehicle and/or a vulnerable road user impacting with the vehicle.

It is also desirable to provide a hinge arrangement, which is able to transfer a longitudinal force in case of a collision, preferably as quickly as possible.

It is further also desirable to provide a hinge arrangement, which can reduce the need for a clearance between the bonnet and the flush-mating fender or vehicle body structure longitudinally behind the bonnet as compared to prior art solutions.

Thus, in a first aspect of the present disclosure there is provided a hinge arrangement for a bonnet of a vehicle, the hinge arrangement in use providing a hinged connection between the bonnet and a body of the vehicle. The hinge arrangement comprises a first hinge member adapted to be attached, directly or indirectly, to the body of the vehicle, and a second hinge member adapted to be attached, directly or indirectly, to the bonnet, and a pivot pin. The first hinge member and the second hinge member are pivotally connected to each other by the pivot pin providing the hinged connection. The first hinge member comprises a first portion protruding in a forward direction. A lower edge of the first portion is adapted to guide a displacement of the second hinge member during an initial phase of opening the bonnet, the displacement being a combination of a translational displacement having at least a forward component of the second hinge member in relation to the first hinge member and a pivotal displacement of the second hinge member in relation to the first hinge member around the pivot pin.

The first hinge member may be attached to the body of the vehicle by any suitable fastening means, for example by screwing or by welding at a lower attachment portion. It may be attached directly to the body, or via an additional member, such as a bracket.

The second hinge member may comprise an upper attachment portion for attachment to the bonnet by any suitable fastening means, for example by screwing or by welding. As an alternative, which e.g. may be used for a deployable bonnet, the second hinge member may be attachable to the bonnet via a third hinge member, which in turn may be attached directly to the bonnet, or via an additional member, such as a bracket. The third hinge member may in that case be pivotally connected to the second hinge member.

The pivot pin provides the hinged connection between the first and second hinge member. The pivot pin may be fixedly attached to the first hinge member or to the second hinge member, or it may be a separate unit inserted through a pivot pin hole in one of the first or second hinge members.

The first portion protrudes from the rest of the first hinge member in a forward direction, i.e. towards the front end of the vehicle. The direction may be angled as long as the direction has a forward component, i.e. with an angle being between 0 and 90 degrees in relation to a horizontal plane, e.g. an angle between 10 and 70 degrees or between 15 and 45 degrees in relation to the horizontal plane.

The lower edge of the first portion is located between the foremost end of the first portion and the location where the first portion joins the rest of the first hinge member.

By utilizing a displacement for the second hinge member in relation to the first hinge member, which is a combination of a translational displacement, having at least a forward component, and a pivotal displacement of the second hinge member in relation to the first hinge member around the pivot pin, the clearance between the bonnet and the flush-mating fender or vehicle body structure longitudinally behind the bonnet may be reduced as compared to prior art solutions.

Since the displacement is guided by the lower edge of the first portion of the first hinge member, it is performed in a controlled and preselectable way.

Further, due to the translational displacement being part of the combined displacement, it is possible to locate the hinge arrangement below the bonnet, such that the pivot axis is located in front of a rear end of the bonnet. Thereby it is possible to use smaller hinge arrangements as compared to prior art, which saves weight and cost and occupies less space. The hinge members may be given a less complicated shape, when they do not extend behind the bonnet, e.g. a swan neck like the one used for prior art second hinge members may be avoided. There will hence be a larger freedom when designing the hinge arrangement.

The proposed hinge arrangement is able to withstand a force having at least a longitudinal component, e.g. in case of a frontal collision, thereby reducing the risk of the bonnet intruding into the windscreen.

In addition, if the hinge arrangement is equipped with engagement means, the engagement means will begin transferring force quicker after a frontal collision as compared to prior art hinge arrangements, since according to prior art hinge arrangements, the engagement means is first longitudinally displaced before it engages. Such engagement means are known to the skilled person. For example one of the first and second hinge members may comprise an engagement means, e.g. a hook, which is arranged to engage with the other of the hinge members, when the second hinge member is subjected to a force having at least a longitudinal component, e.g. in case of a frontal collision. Thereby at least part of the force is transferable to the first hinge member by means of the engagement.

The hinge arrangement according to this disclosure works both for a bonnet arrangement being able to assume the deployed position and for a bonnet arrangement having no deployed position. The deployed position may be used to mitigate the consequences for a vulnerable road user impacting with the vehicle.

In an embodiment, the second hinge member comprises a guide member, which is arranged to be guided by the lower edge of the first portion during the initial phase of opening the bonnet. The guide member may be in the form of a pin or bolt, adapted to follow the lower edge of the first portion. The geometry of the lower edge is hence shaped, such that the second hinge member performs the combined displacement, when the guide member follows the shape of the lower edge. Thereby a well-controlled displacement is achieved. The guide member may be lined with a protective coating, in order to protect the surface finish of the first portion of the first hinge member.

At least one of the first hinge member and second hinge member may comprise an elongated slot, the pivot pin being arranged to go through the slot, the slot allowing the translational displacement having at least a forward component of the second hinge member in relation to the first hinge member during opening of the bonnet.

Preferably, the slot extends in a substantially longitudinal direction. As an alternative, the slot may be angled in relation to the horizontal plane, e.g. by an angle between 0 and +/-45 degrees. The slot may extend straightly, or may comprise one or more bends. The slot may also have an arcuate shape. The slot may also have a more complex shape. However, the shape of the slot should be such that the translation of the second hinge member in relation to the first hinge member has at least a forward component.

As already mentioned above, the shape of the lower edge of the first portion guides the displacement of the second hinge member relative to the first hinge member. The shape of the slot and the shape of the lower edge are thus selected such that they fit with each other, the shape of the lower edge also being selected to fit with the pivotal displacement of the second hinge member relative to the first hinge member.

The slot may be located in the second hinge member or in the the first hinge member. There may also be a slot in both of the first and second hinge members. Common to the alternatives is that the second hinge member is able to move in relation to the first hinge member during the initial phase of opening the bonnet by the pivot pin moving in the slot. In addition, the second hinge member is able to pivot around the pivot pin, resulting in a relative displacement between the second hinge member and the first hinge member, which is a combination of the translational displacement of the pivot pin in the slot and the pivotal displacement around the pivot pin.

The slot may provide a first position of the second hinge member in relation to the first hinge member being used when the bonnet is in a closed position, and a second more forward position of the second hinge member in relation to the first hinge member being used at least in the initial phase of the opening of the bonnet. The positions may be given by a front and a rear end of the slot.

As an alternative to utilizing a slot, the hinge arrangement may comprise a sliding unit, such as a slide bar, providing the translational displacement, while the pivot pin provides the pivotal displacement. The two kinds of displacements are then geometrically split, although they combine to provide the desired combined displacement of the second hinge member in relation to the first hinge member during the initial phase of opening the bonnet.

The first hinge member and/or the second hinge member may be biased towards the first position, preferably biased by means of a resilient member. Alternatively, the hinge members may be held in the first position by a width variation of the slot, e.g. that the pivot pin has to pass a somewhat smaller width of the slot to make the translational displacement possible.

The resilient member may extend between the pivot pin and an attachment to the hinge member comprising the slot, thereby biasing the hinge member towards the first position. The resilient member may be a spring, such as a coil spring. The characteristics of the resilient member may be selected to provide a suitable level for a force used to open the bonnet.

As an alternative, the resilient member may extend within the slot, e.g. from the rear end towards the front end. In that case the resilient member may comprise a spring or a resilient member, e.g. made of rubber, located within the slot.

As mentioned above, at least one of the first and second hinge members, may comprise an engagement means arranged to engage with the other of the first and second hinge members, when the second hinge member is subjected to a force having at least a longitudinal component, such that at least part of the force is transferable to the first hinge member by means of the engagement, wherein the first position of the second hinge member in relation to the first hinge member is selected such that the engagement means is in, or within a few millimetres from, an engaged state. In an embodiment, the engagement means is almost in an engagement position, i.e. a position wherein the engagement means is in the engaged state. Thereby, the risk of noise is reduced, while yet a very quick engagement may be obtained in case of collision. The engagement means may be between 0 and 5 mm from the engagement position, preferably between 0.5 and 3 mm from the engagement position.

The first position of the second hinge member in relation to the first hinge member may be defined by a front end of the slot and/or the engagement position of the engagement means. This may depend on tolerances when manufacturing the hinge arrangement. However, it is believed that it is preferable to allow the front end of the slot define the first position and have a narrow gap between the engagement means and the engagement position, since otherwise the is a risk that a noise could occur from the contact between the engagement means and the hinge member it engages with.

The engagement means may be lined with a protective coating, in order to protect the surface finish of the first portion of the first hinge member.

The first hinge member may be reinforced at the location where the engagement means is adapted to engage, e.g. by being thicker.

The engagement means is preferably located on a vertical level being below the first portion of the first hinge member, when the bonnet is in the closed position. Thereby the lower edge of the first portion can help to keep the engagement means in place during a frontal collision.

The engagement means may comprise the guide member. For example, if the guide member has the shape of a bolt following the lower edge, the bolt may be arranged to at the rear end of the lower edge engage with the first hinge member.

Further, if the hinge arrangement is adapted to assume a position corresponding to the bonnet being in a deployed position, the engagement means may be arranged such that the engagement means is able to engage with the other of the first and second hinge member also when in the deployed position. The engagement means may for example be adapted to engage around the first portion, e.g. at a foremost part of the first portion.

The first hinge member may further comprise a second forwardly protruding portion, the second portion being located vertically below the first portion, such that a groove is defined by the lower edge of the first portion and an upper edge of the second portion.

The second forwardly protruding portion may help to prevent the bonnet from over-slam, i.e. passing below its normal closed position, if slamming the bonnet down from an open position with a high force.

The direction of the second portion may be angled as long as the direction has a forward component, i.e. with an angle being between 0 and 90 degrees in relation to a horizontal plane, e.g. an angle between 10 and 70 degrees or between 15 and 45 degrees in relation to the horizontal plane.

The upper edge of the second portion is located between the foremost end of the second portion and the location where the second portion joins the rest of the first hinge member.

The groove may be arranged such that a rear end of the groove corresponds to the first position of the second hinge member in relation to the first hinge member being used when the bonnet is in the closed position. Also, if the engagement means comprises the guide member, the guide member is preferably arranged such that it engages with the rear end of the groove, in case of being subjected to the force having a longitudinal component, thereby being able to transfer the force.

The guide member may be arranged to move in the groove during the initial phase of opening the bonnet and to leave the groove when the bonnet is further opened. Thereby the guide member is able to perform a well-controlled displacement, since the guide member can only move along the groove, and is restricted to move upwards by the lower edge of the first portion and restricted to move downwards by the upper edge of the second portion, as long as the guide member is located in the groove. The guide member then leaves the groove to perform the full pivotal displacement in order to reach the open position of the bonnet.

In a second aspect of the present disclosure there is provided a bonnet arrangement comprising a bonnet and a hinge arrangement according to above, wherein the pivot axis of the hinge arrangement is located at or in front of the rear end of the bonnet. As described above, the hinge arrangement according to the disclosure makes this location possible.

In a third aspect of the present disclosure there is provided a vehicle comprising a bonnet, a body and a hinge arrangement according to above, the hinge arrangement providing a hinged connection between the bonnet and the body of the vehicle.

### BRIEF DESCRIPTION OF THE DRAWINGS

The present invention will hereinafter be further explained by means of non-limiting examples with reference to the appended drawings wherein:
- Fig. 1: is a schematic side view of a front portion of a vehicle illustrating the bonnet in a closed position and in an open position,
- Fig. 2: is the front portion of Fig. 1 illustrating the bonnet in a deployed position,
- Fig. 3: illustrates a hinge arrangement in accordance with a first embodiment,
- Fig. 4: illustrates the hinge arrangement of Fig. 3 seen from the other side,
- Fig. 5: illustrates the hinge arrangement of Fig. 3 when opening the bonnet,
- Fig. 6: illustrates a hinge arrangement in accordance with a second embodiment,
- Fig. 7: illustrates the hinge arrangement of Fig. 6 in the deployed position,
- Fig. 8: illustrates a hinge arrangement according to a third embodiment in the deployed position,
- Fig. 9: illustrates a bonnet arrangement according to the invention, and
- Fig. 10: illustrates a prior art bonnet arrangement.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

The words front and rear used below relate to the vehicle, where front is the part coming first in the normal forward driving direction. The directions longitudinal, transverse and vertical also relate to the vehicle. Longitudinal is along the normal driving direction.

Transverse is perpendicular to the longitudinal direction but in the same horizontal plane, i.e. sideways or laterally in the vehicle. Vertical is perpendicular to that plane. Directions which are used for the hinge arrangement relates to when it is mounted in the vehicle.

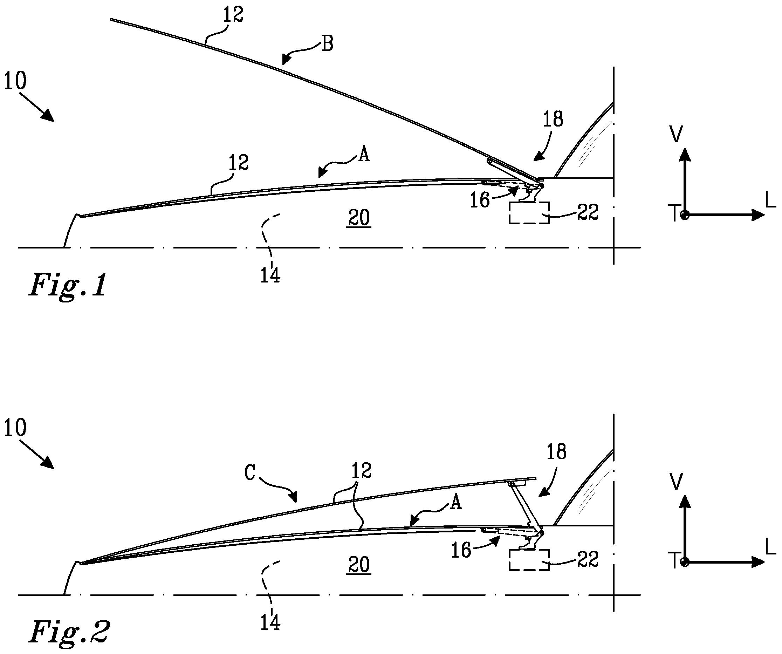

Figure 1 is a schematic side view of a front end of a vehicle 10, here a car. The vehicle 10 has a longitudinal direction L, a transverse direction T and a vertical direction V. The vehicle 10 is provided with a bonnet 12, which covers an engine compartment 14 and allows access to the engine compartment 14 for maintenance and/or repair. The bonnet 12 is connected to the vehicle 10 by a hinge arrangement 16, normally one hinge arrangement 16 adjacent to each lateral side of the bonnet 12. A rear end 18 of the bonnet 12 is directed towards a windscreen of the vehicle 10. The hinge arrangement 16 provides a hinged connection of the bonnet 12 in relation to a body 20 of the vehicle 10. The hinge arrangement 16 is located adjacent to the rear end 18 of the bonnet 12. Normally the bonnet 12 is in a closed position A covering the engine compartment 14. The bonnet 12 can be displaced to an open position B allowing normal access to the engine compartment 14 for maintenance and/or repair. The vehicle 10 is normally stationary when displacing the bonnet 12 to the open position B.

The bonnet 12 is connected to an actuator 22, only schematically illustrated, which is positioned somewhere in the vehicle construction, generally beneath the bonnet 12. The actuator 22 is arranged to displace the bonnet 12 to a deployed position C, also called a pop-up position, see Figure 2, after sensor input that the vehicle 10 is about to hit a vulnerable road user, such as a pedestrian or a cyclist. The closed position A is shown as a reference in Figure 2. Normally, one or more sensors (not shown) are used to detect a collision with the vulnerable road user. In case of a collision, the actuator 22 is activated. The actuator 22 may be an inflatable member, such as a pedestrian airbag, a pyrotechnical device, a mechanical spring, a compressed-air piston, an electrical lifter, a rack or a lifting arm. When the actuator 22 raises the bonnet 12, a distance is formed between the bonnet 12 and hard parts of the engine, allowing deflection of the bonnet 12 without the risk of the head of the vulnerable road user hitting any hard parts of the engine. The bonnet 12 may be raised at both ends, but normally the rear end 18 is raised to a higher position. The distance formed between the bonnet 12 and the hard parts of the engine is typically between 50 and 130 millimetres.

However, it should be pointed out that the hinge arrangement 16 according to this disclosure works both for a bonnet arrangement being able to assume the deployed position C, i.e. comprising the positions A, B and C, and for a bonnet arrangement having no deployed position C, i.e. comprising the positions A and B and being movable there between.

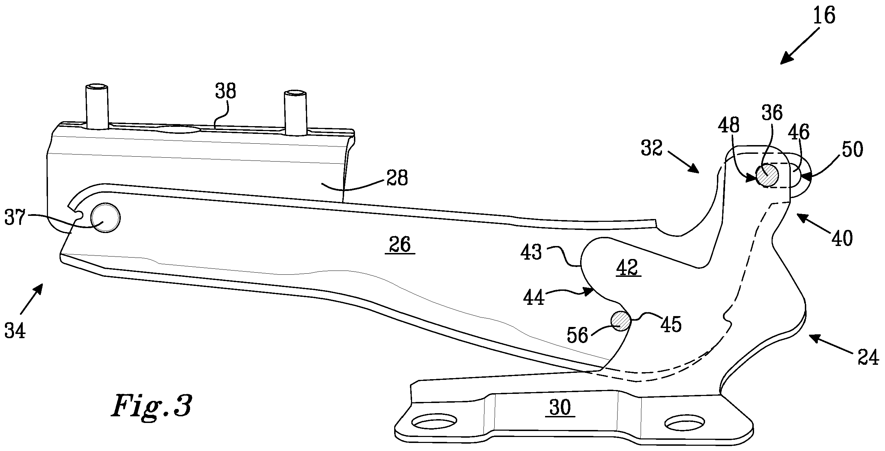

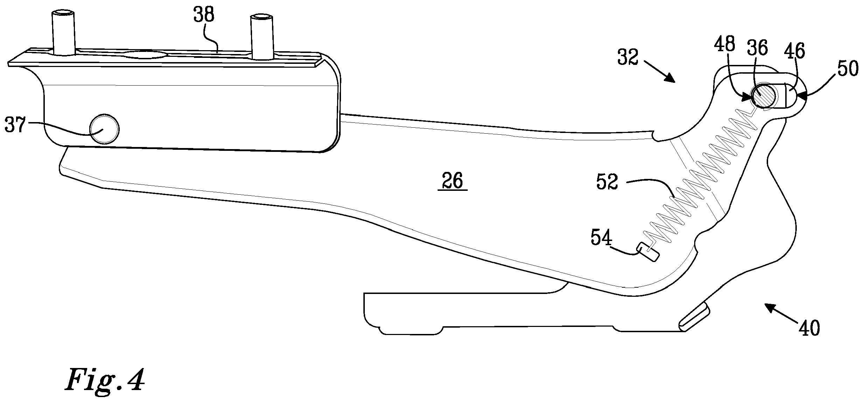

Figures 3 and 4 illustrate a hinge arrangement 16 in accordance with a first embodiment of the invention, assuming that the bonnet 12 to which the hinge arrangement 16 is arranged is in the closed position A. The hinge arrangement 16 comprises a first hinge member 24, a second hinge member 26 and a third hinge member 28. Figure 3 is a side view showing the first hinge member 24 in front of the second hinge member 26, as if a hinge arrangement located at the left side of the bonnet 12 is seen from the left lateral side of the vehicle 10. Figure 4 is a side view showing the hinge arrangement 16 of Figure 3 as seen from a longitudinal centre line of the vehicle 10, the second hinge member 26 being seen in front of the first hinge member 24.

The first hinge member 24 comprises an attachment portion 30 for attachment to the body 20 of the vehicle 10. The first hinge member 24 may be attached to the body 20 of the vehicle 10 by any suitable fastening means, for example by screwing or by welding at the attachment portion 30. It may be attached directly to the body 20, or via an additional member, such as a bracket. The first hinge member 24 further comprises an upper portion 40. A pivot pin 36 located at the upper portion 40 provides the hinged connection between the first 24 and second hinge member 26. The pivot pin 36 may be fixedly attached to the first hinge member 24 or it may be a separate unit inserted through a pivot pin hole in the first hinge member 24. The first hinge member 24 also comprises a first portion 42 protruding forwards in the longitudinal direction L of the vehicle. The first portion 42 comprises a lower edge 44 having a geometry which is shaped to guide the second hinge member 26 during an initial phase of opening the bonnet 12. The lower edge 44 of the first portion 42 is located between a foremost end 43 of the first portion 42 and the location 45 where the first portion 42 joins the rest of the first hinge member 24.

The second hinge member 26 comprises a hinge arm extending substantially in the longitudinal direction L of the vehicle 10. Its first end 32 is connected to the first hinge member 24. The opposite end of the second hinge member 26, i.e. the second end 34, is pivotally connected to the third hinge member 28 by means of e.g. a pop-up pivot pin 37.

The third hinge member 28 is fixedly attachable to the bonnet 12 by any suitable fastening means in an attachment portion 38, for example by screwing or by welding.

The second hinge member 26 comprises a slot 46, adapted to receive the pivot pin 36. The slot 46 extends substantially in the longitudinal direction L. A front end 48 of the slot 46 defines a first position of the second hinge member 26 relative to the first hinge member 24, which is used when the bonnet 12 is closed. In the illustrated example, the second hinge member 26 is biased towards the first position by means of a resilient member 52 extending between the pivot pin 36 and an attachment 54 to the second hinge member 26, as seen in Figure 4.

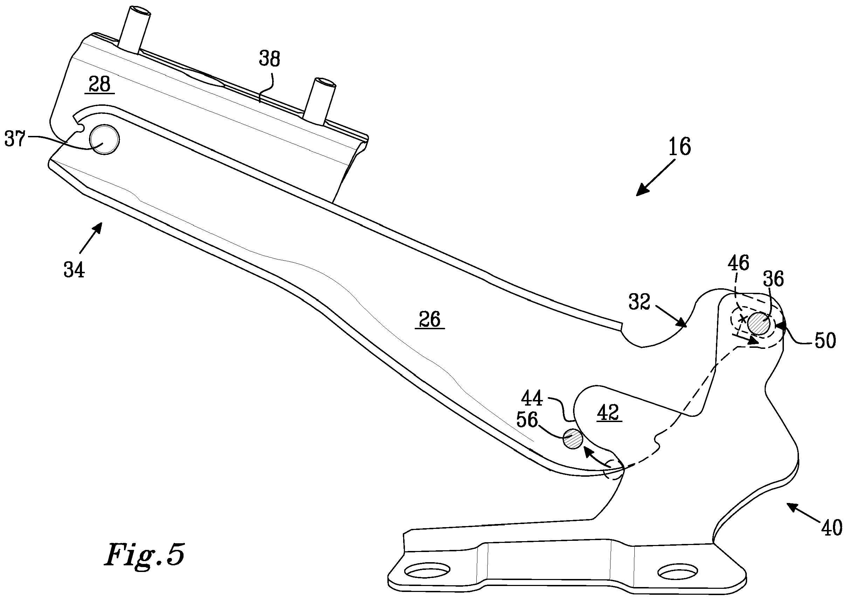

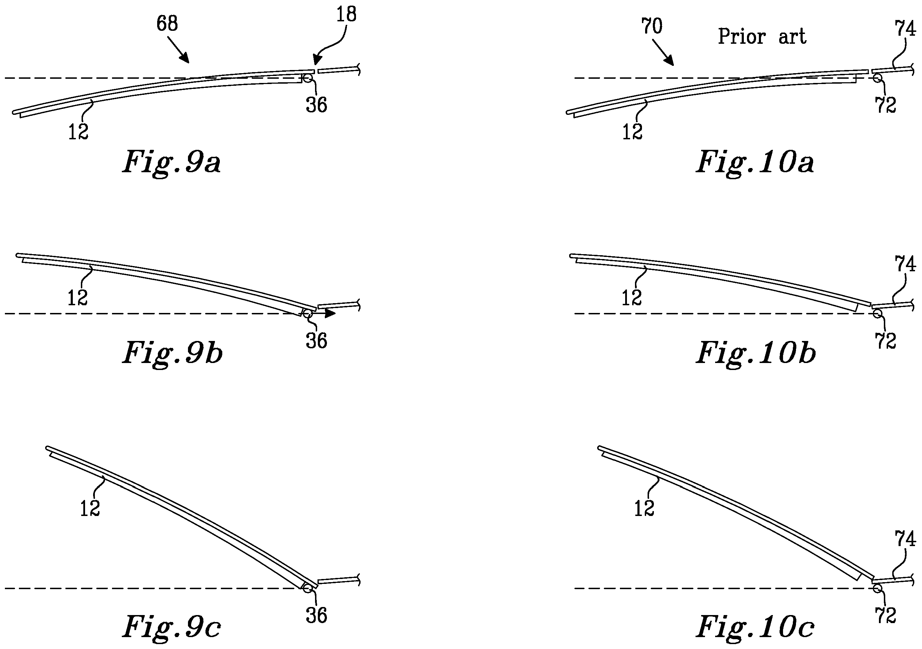

When opening the bonnet 12, see Figure 5 illustrating the bonnet 12 while being opened, the pivot pin 36 is translationally displaced towards a second position of the second hinge member 26 relative to the first hinge member 24 defined by a rear end 50 of the slot 46. The second hinge member 26 then moves forwards in relation to the first hinge member 24. The translation in the slot 46 may be between 1 and 20 mm, preferably between 3 and 15 mm and most preferably between 5 and 10 mm. During opening of the bonnet 12, the second hinge member 26 is further pivoted around the pivot pin 36 in relation to the first hinge member 24. The displacement of the second hinge member 26 in relation to the first hinge member 24 is hence a combination of the translation of the second hinge member 26 relative to the first hinge member 24, here the translational displacement of the pivot pin 36 in the slot 46, and the pivotal displacement around the pivot pin 36. The combined displacement is guided by the lower edge 44 of the first portion. The second hinge member 26 may e.g. comprise a guide member 56, e.g. in the form of a pin or bolt, following the lower edge 44 of the first portion 42. The geometry of the lower edge 44 is hence shaped, such that the second hinge member 26 performs the combined displacement, when the guide member 56 follows the shape the lower edge 44. Thereby a well-controlled displacement is achieved. Further, due to the translational displacement of the second hinge member 26 relative to the first hinge member 24 during the initial phase of the opening of the bonnet 12 comprising a forward component, it is possible to locate the hinge arrangement 16 below the bonnet 12 in such a position, that the pivot axis 36 is located in front of the rear end of the bonnet 12, which is further described in conjunction with Figures 9a-c below.

Even if Figures 3-5 show that the slot 46 is located in the second hinge member 26, it would also be feasible to have a slot in the the first hinge member 24 and to let the second hinge member 26 comprise the pivot pin. There may also be a slot in both of the hinge members 24, 26. Common to the alternatives for the slot is that the second hinge member 26 is able to move in relation to the first hinge member 24 during the initial phase of opening the bonnet 12 by the pivot pin moving in the slot. In addition the second hinge member 26 pivots around the pivot pin, resulting in a relative displacement between the second hinge member 26 and the first hinge member 24, which is a combination of the displacement of the pivot pin in the slot and the pivotal displacement around the pivot pin.

The slot 46 of the first embodiment extends in a substantially longitudinal direction. As an alternative, the slot may be angled in relation to the horizontal plane, e.g. by an angle between 0 and 45 degrees. The slot may extend straightly, or may comprise one or more bends. The slot may also have an arcuate shape. The slot may also have a more complex shape. However, the shape of the slot should be such that the translation of the second hinge member in relation to the first hinge member has at least a forward component.

As already mentioned above, the shape of the lower edge 44 of the first portion 42 guides the displacement of the second hinge member 26 relative to the first hinge member 24. The shape of slot 46 and the shape of the lower edge 44 are thus selected such that they fit with each other, the shape of the lower edge also being selected to fit with the pivotal displacement of the second hinge member 26 relative to the first hinge member 24.

As mentioned above, the principle of the hinge arrangement 16 would also work for a bonnet arrangement having no deployed position C, i.e. comprising the positions A and B, and being movable there between for opening the bonnet. In that case, the third hinge member 28 could be dispensed with and the second hinge member 26 could be, directly or indirectly, attached to the bonnet 12.

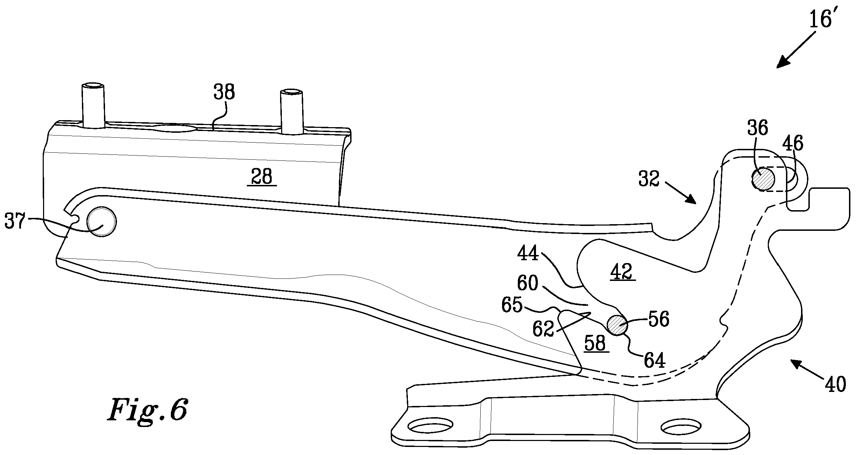

Figure 6 illustrate a hinge arrangement 16' in accordance with a second embodiment of the invention, assuming that the bonnet 12, to which the hinge arrangement 16' is arranged, is in the closed position A. Most details of the hinge arrangement 16' are similar to the first embodiment and will not be mentioned again.

The hinge arrangement 16' of the second embodiment in addition comprises a second forwardly protruding portion 58, which is located vertically below the first portion 42, such that a groove 60 is defined by the lower edge 44 of the first portion 42 and an upper edge 62 of the second portion 56. The guide member 56 is adapted to move in the groove 60. The groove 60 is preferably arranged such that the guide member 56 being at a rear end 64 of the groove 60 substantially corresponds to the first position of the second hinge member 26 in relation to the first hinge member 24. The upper edge 62 of the second portion 58 is located between the foremost end 65 of the second portion 58 and the location where the second portion 58 joins the rest of the first hinge member 24, i.e. at the rear end 64 of the groove 60.

The second forwardly protruding portion 58 will also help to prevent the bonnet from over-slam, i.e. passing below its normal closed position A, if slamming the bonnet down from the open position B with a high force.

At least one of the first and second hinge members of the hinge arrangement according to the invention may comprise an engagement means arranged to engage with the other one of the first and second hinge members, when the second hinge member is subjected to a force having at least a longitudinal component, e.g. in case of a frontal collision. Thereby at least part of the force is transferable to the first hinge member by means of the engagement.

Purely as an example, the guide member 56 may act as an engagement means in the hinge arrangement 16, 16' according to the invention. When the guide member 56 is located at the rear end 64 of the groove 60, it will be able to transfer a force having a longitudinal component to the first hinge member 24.

The first position of the second hinge member 26 in relation to the first hinge member 24 is preferably selected, such that the engagement means 56 is in, or within a few millimetres from, an engaged state, e.g. from the rear end 64 of the groove 60, when the bonnet 12 is in the closed position A. Thereby the engagement means 56 will begin transferring the force quicker after a frontal collision as compared to prior art hinge arrangements, since according to prior art hinge arrangements, the engagement means is first longitudinally displaced before it engages. The longitudinal displacement of the prior art hinge arrangements is used to span the gap between the second hinge member and the first hinge member, which gap allows the second hinge member to be open by the pivotal displacement around the pivot axis without being obstructed by the first hinge member. According to the invention, the pivot axis is displaced in the slot, thereby reducing, or even eliminating, the need for a gap between the second hinge member and the first hinge member. Therefore, the engagement means of the hinge arrangement according to the invention may be in an engaged state, whenever the bonnet is in the closed position A, or there may be only a narrow gap, e.g. a few millimetres, between the second hinge member 26 and the first hinge member 24. In an embodiment, the engagement means is almost in an engagement position. Thereby, the risk of noise is reduced, while yet a very quick engagement may be obtained in case of collision. The engagement means may be between 0 and 5 mm from the engagement position, preferably between 0.5 and 3 mm from the engagement position.

The first position of the second hinge member 26 in relation to the first hinge member 24 may thus be defined by the front end 48 of the slot 46 and/or the engagement position of the engagement means, in Fig 6 corresponding to the guide member 56 being at the rear end 64 of the groove 60. This may depend on tolerances when manufacturing the hinge arrangement. However, it is believed that it is preferable to allow the front end 48 of the slot 46 define the first position and have a narrow gap between the engagement means and the engagement position, since otherwise there is a risk that a noise could occur from the contact between the engagement means and the hinge member it engages with.

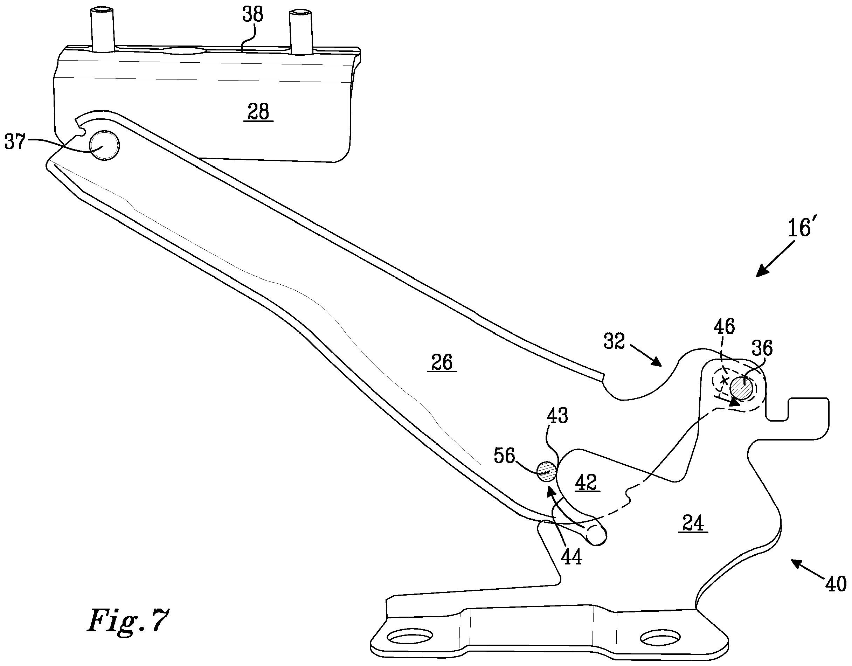

Further, if using a hinge arrangement, which is able to assume the deployed position C, it is preferred to arrange the engagement means such that it can engage with the other of the first and second hinge members 24, 26 also when in the deployed position C. See Figure 7 showing the bonnet 12 being in the deployed position C. The third hinge member 28 has rotated around the pop-up pivot pin 37 in relation to the second hinge member 26 in order to provide the deployed position C of the bonnet 12. The guide member 56 engages with a foremost part of the first portion 42 of the first hinge member 24, i.e. a part of the first portion 42 comprising the foremost end 43. The foremost part may make up 50%, preferably 25% and most preferably 10% of the first portion 42. During the displacement of the bonnet 12 to the deployed position C, the pivot pin 36 has been displaced in the slot 46 towards the rear end 50. The pivot pin 36 thus is in the rear half of the slot 46, when the bonnet 12 is in the deployed position C.

Also the hinge arrangement 16 of the first embodiment may assume the deployed position C of the bonnet in a similar way as illustrated in Figure 7 with the guide member 56 engaging with the first portion 42 of the first hinge member 24.

As an alternative, or a complement, to using the guide member 56 as the engagement means, the engagement means may have the shape of a hook located in a substantially horizontal plane, when the bonnet is in the closed position. Purely as an example the second hinge member may comprise a hook facing the first hinge member. The first hinge member may comprise a receiving means for receiving the hook, which is adapted to be able grip around the receiving means in case of a frontal collision, but the engagement means would also work with two opposing flat surfaces. However, the hook shape is suitable, since it also prevents lateral movement, except for the few millimeters within the hook, assuming the hook is oriented in a horizontal plane. As an alternative, or a complement, the first hinge member may comprise a hook, for example by having a vertical notch, the hook shape gripping around a protrusion from the second hinge member. Such engagement means are known to the skilled person and will not be explained herein in any further detail.

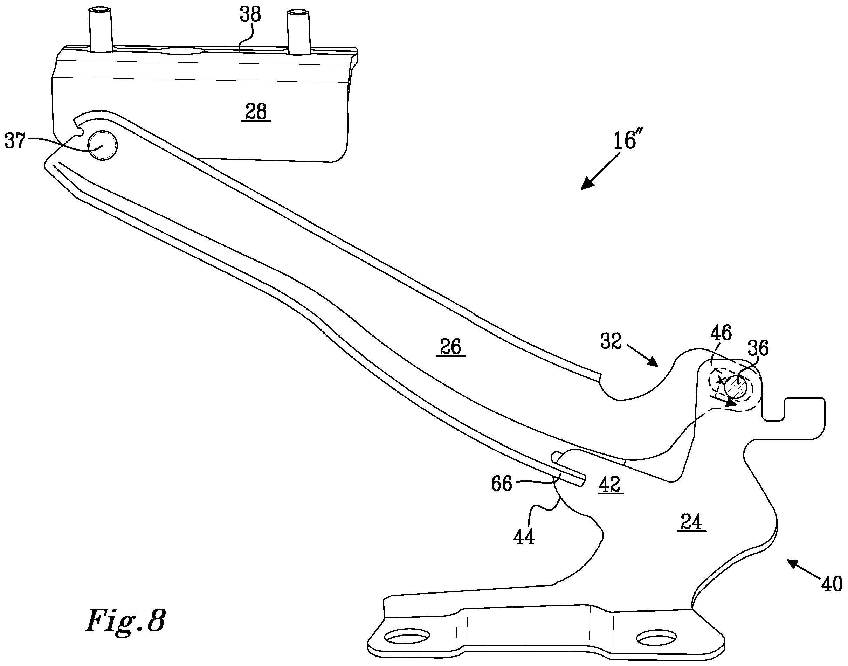

In a hinge arrangement 16" according to a third embodiment of the invention illustrated in Figure 8, the engagement means comprises a hook 66 located in a substantially horizontal plane, when the bonnet 12 is in the closed position A. The engagement means, i.e. the hook 66, is arranged to be located below the first portion 42 of the first hinge member 24, when the bonnet 12 is in the closed position A. Further, the engagement means 66 is arranged such that it can engage with the other of the first and second hinge members 24, 26 also when in the deployed position C. See Figure 8, illustrating that the hook 66 grips around the first portion 42 of the first hinge member 24 in the deployed position C. The engagement means 66 may be lined with a protective coating, in order to protect the surface finish of the first portion 42.

Figures 9a-c show a bonnet arrangement 68 comprising the hinge arrangement 16, 16', 16" according to the invention. Figure 9a shows the closed position of the bonnet 12. Figure 9b shows a moment during the initial phase of opening the bonnet 12. Figure 9c shows a subsequent phase of opening the bonnet 12. Figures 10a-c show corresponding positions for a prior art bonnet arrangement 70.

By using the hinge arrangement 16, 16', 16" according to the disclosure, it is possible to locate the pivot axis 36 in front of the rear end 18 of the bonnet 12, see Figure 9a, while according to prior art, see Figure 10a, the prior art pivot axis 72 is located below a flush-mating fender or vehicle body structure 74 located longitudinally behind the bonnet 12. Therefore, when lifting the bonnet of the prior art bonnet arrangement 70, there is a risk of conflict between the bonnet and the flush-mating fender or vehicle body structure 74 located behind the bonnet. According to prior art, this may be solved by using a clearance between the bonnet and the fender or vehicle body structure 74, typically of 2-8 mm. If the pivot point of the prior art bonnet arrangement 70 would be located more forward, the risk of conflict would be increased. With the hinge arrangement 16, 16', 16" according to the disclosure, the pivot pin 36 is displaceable in the slot 46, which makes it possible to avoid the risk of the risk of conflict between the bonnet and the flush-mating fender or vehicle body structure behind the bonnet. Thereby the clearance between the bonnet and the flush-mating fender or vehicle body structure may be much smaller than for the prior art hinge arrangement. The vehicle will hence look aesthetically more pleasing, and there will be less risk of precipitation and/or dirt entering into the clearance.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A hinge arrangement (16, 16', 16") for a bonnet (12) of a vehicle (10), said hinge arrangement (16, 16', 16") in use providing a hinged connection between said bonnet (12) and a body (20) of said vehicle (10), said hinge arrangement (16, 16', 16") comprising
- a first hinge member (24) adapted to be attached, directly or indirectly, to said body (20) of said vehicle (10),
- a second hinge member (26) adapted to be attached, directly or indirectly, to said bonnet (12), and
- a pivot pin (36),
said first hinge member (24) and said second hinge member (26) being pivotally connected to each other by said pivot pin (36) providing said hinged connection,
**characterized in that**
said first hinge member (24) comprises a first portion (42) protruding in a forward direction, a lower edge (44) of said first portion (42) being adapted to guide a displacement of said second hinge member (26) during an initial phase of opening said bonnet (12), said displacement being a combination of a translational displacement having at least a forward component of said second hinge member (26) in relation to said first hinge member (24) and a pivotal displacement of said second hinge member (26) in relation to said first hinge member (24) around said pivot pin (36).

2. The hinge arrangement (16, 16', 16") according to claim 1, wherein said second hinge member (26) comprises a guide member (56), which is arranged to be guided by said lower edge (44) of said first portion (42) during said initial phase of opening said bonnet (12).

3. The hinge arrangement (16, 16', 16") according to claim 1 or 2, wherein at least one of said first hinge member (24) and second hinge member (26) comprises an elongated slot (46), said pivot pin (36) being arranged to go through said slot (46), said slot (46) allowing said translational displacement having at least a forward component of said second hinge member (26) in relation to said first hinge member (24) during said initial phase of said opening of said bonnet (12), said slot (46) preferably extending in a substantially longitudinal direction.

4. The hinge arrangement (16, 16', 16") according to claim 3, wherein said slot (46) provides a first position of said second hinge member (26) in relation to said first hinge member (24) being used when said bonnet (12) is in a closed position (A), and a second more forward position of said second hinge member (26) in relation to said first hinge member (24) being used at least in said initial phase of said opening of said bonnet (12).

5. The hinge arrangement (16, 16', 16") according to claim 4, wherein said first hinge member (24) and/or said second hinge member (26) is biased towards said first position, preferably biased by means of a resilient member (52).

6. The hinge arrangement (16, 16', 16") according to claim 5, wherein said resilient member (52) extends between said pivot pin (36) and an attachment (54) to said hinge member (24, 26) comprising said slot (36), thereby biasing said hinge member (24, 26) towards said first position.

7. The hinge arrangement (16, 16', 16") according to any one of claims 4-6, wherein at least one of said first and second hinge members (24, 26) comprises an engagement means (56, 66) arranged to engage with said other of said first and second hinge members (24, 26) when said second hinge member (26) is subjected to a force having at least a longitudinal component, such that at least part of said force is transferable to said first hinge member (24) by means of said engagement, wherein said first position of said second hinge member (26) in relation to said first hinge member (24) is selected such that said engagement means (56, 66) is in, or within a few millimetres from, an engaged state.

8. The hinge arrangement (16, 16', 16") according to claim 7, wherein said engagement means (56, 66) is located below said first portion (42) of said first hinge member (24), when said bonnet (12) is in said closed position (A).

9. The hinge arrangement (16, 16', 16") according to claim 7 or 8, when dependent on claim 2, wherein said engagement means comprises said guide member (56).

10. The hinge arrangement (16, 16', 16") according to any one of claims 7-9, wherein said hinge arrangement (16, 16', 16") further is adapted to assume a position corresponding to said bonnet being in a deployed position (C), said engagement means (56, 66) being arranged such that said engagement means (56, 66) is able to engage with said other of said first (24) and second hinge member (26) also when in said deployed position (C).

11. The hinge arrangement (16, 16', 16") according to any of the preceding claims, wherein said first hinge member (24) further comprises a second forwardly protruding portion (58), said second portion (58) being located vertically below said first portion (42), such that a groove (60) is defined by said lower edge (44) of said first portion (42) and an upper edge (62) of said second portion (58).

12. The hinge arrangement (16, 16', 16") according to claim 11 when dependent on any one of claims 4-6, wherein a rear end (64) of said groove (60) corresponds to said first position of said second hinge member (26) in relation to said first hinge member (24) being used when said bonnet (12) is in said closed position (A).

13. The hinge arrangement (16, 16', 16") according to claim 11 or 12 when dependent on claim 2, wherein said guide member (56) is arranged to move in said groove (60) during said initial phase of opening said bonnet (12) and to leave said groove (60) when said bonnet (12) is further opened.

14. A bonnet arrangement (68) comprising a bonnet (12) and a hinge arrangement (16, 16', 16") according to any one of the preceding claims, wherein said pivot axis (36) of said hinge arrangement (16, 16', 16") is located at, or in front of, a rear end (18) of said bonnet (12).

15. A vehicle (10) comprising a bonnet (12), a body (20) and a hinge arrangement (16, 16', 16") according to any of claims 1-13, said hinge arrangement (16, 16', 16") providing a hinged connection between said bonnet (12) and said body (20) of said vehicle (10).

## Patentansprüche

1. Scharnieranordnung (16, 16', 16") für eine Motorhaube (12) eines Fahrzeugs (10), wobei die Scharnieranordnung (16, 16', 16") im Gebrauch eine Scharnierverbindung zwischen der Motorhaube (12) und einer Karosserie (20) des Fahrzeugs (10) bereitstellt, wobei die Scharnieranordnung (16, 16', 16") Folgendes umfasst:
- ein erstes Scharnierelement (24), das adaptiert ist, um direkt oder indirekt an der Karosserie (20) des Fahrzeugs (10) befestigt zu werden,
- ein zweites Scharnierelement (26), das adaptiert ist, um direkt oder indirekt an der Motorhaube (12) befestigt zu werden, und
- einen Drehzapfen (36),
wobei das erste Scharnierelement (24) und das zweite Scharnierelement (26) schwenkbar über den Drehzapfen (36) miteinander verbunden sind, der die Scharnierverbindung bereitstellt,
**dadurch gekennzeichnet, dass**
das erste Scharnierelement (24) einen ersten Abschnitt (42) umfasst, der in eine Vorwärtsrichtung ragt, wobei ein unterer Rand (44) des ersten Abschnitts (42) adaptiert ist, um eine Verschiebung des zweiten Scharnierelements (26) während einer Anfangsphase der Öffnung der Motorhaube (12) zu führen, wobei die Verschiebung eine Kombination aus einer Translationsverschiebung mit mindestens einer Vorwärtskomponente des zweiten Scharnierelements (26) in Bezug auf das erste Scharnierelement (24) und einer Schwenkverschiebung des zweiten Scharnierelements (26) in Bezug auf das erste Scharnierelement (24) um den Drehzapfen (36) herum ist.

2. Scharnieranordnung (16, 16', 16") nach Anspruch 1, wobei das zweite Scharnierelement (26) ein Führungselement (56) umfasst, das so angeordnet ist, dass es während der Anfangsphase der Öffnung der Motorhaube (12) durch den unteren Rand (44) des ersten Abschnitts (42) geführt werden soll.

3. Scharnieranordnung (16, 16', 16") nach Anspruch 1 oder 2, wobei mindestens eines des ersten Scharnierelements (24) und des zweiten Scharnierelements (26) einen länglichen Schlitz (46) umfasst, wobei der Drehzapfen (36) so angeordnet ist, dass er durch den Schlitz (46) geht, wobei der Schlitz (46) die Translationsverschiebung mit mindestens einer Vorwärtskomponente des zweiten Scharnierelements (26) in Bezug auf das erste Scharnierelement (24) während der Anfangsphase der Öffnung der Motorhaube (12) ermöglicht, wobei der Schlitz (46) sich vorzugsweise in einer wesentlichen Längsrichtung erstreckt.

4. Scharnieranordnung (16, 16', 16") nach Anspruch 3, wobei der Schlitz (46) eine erste Position des zweiten Scharnierelements (26) in Bezug auf das erste Scharnierelement (24), die verwendet wird, wenn sich die Motorhaube (12) in einer geschlossenen Position (A) befindet, und eine zweite, weiter vorne liegende Position des zweiten Scharnierelements (26) in Bezug auf das erste Scharnierelement (24) bereitstellt, die mindestens in der Anfangsphase der Öffnung der Motorhaube (12) verwendet wird.

5. Scharnieranordnung (16, 16', 16") nach Anspruch 4, wobei das erste Scharnierelement (24) und/oder das zweite Scharnierelement (26) in Richtung der ersten Position vorgespannt ist, vorzugsweise mittels eines federnden Elements (52) vorgespannt ist.

6. Scharnieranordnung (16, 16', 16") nach Anspruch 5, wobei das federnde Element (52) sich zwischen dem Drehzapfen (36) und einem Ansatz (54) an dem Scharnierelement (24, 26) erstreckt, das den Schlitz (36) umfasst, wodurch das Scharnierelement (24, 26) in Richtung der ersten Position vorgespannt wird.

7. Scharnieranordnung (16, 16', 16") nach einem der Ansprüche 4 bis 6, wobei mindestens eines des ersten und des zweiten Scharnierelements (24, 26) ein Eingriffmittel (56, 66) umfasst, das zum Eingriff mit dem anderen des ersten und des zweiten Scharnierelements (24, 26) angeordnet ist, wenn das zweite Scharnierelement (26) einer Kraft mit mindestens einer längsgerichteten Komponente unterworfen wird, so dass mindestens ein Teil der Kraft mittels des Eingriffes auf das erste Scharnierelement (24) übertragbar ist, wobei die erste Position des zweiten Scharnierelements (26) in Bezug auf das erste Scharnierelement (24) so gewählt ist, dass das Eingriffmittel (56, 66) sich in oder innerhalb weniger Millimeter von einem Eingriffzustand befindet.

8. Scharnieranordnung (16, 16', 16") nach Anspruch 7, wobei das Eingriffmittel (56, 66) sich unter dem ersten Abschnitt (42) des ersten Scharnierelements (24) befindet, wenn sich die Motorhaube (12) in der geschlossenen Position (A) befindet.

9. Scharnieranordnung (16, 16', 16") nach Anspruch 7 oder 8 in Abhängigkeit von Anspruch 2, wobei das Eingriffmittel das Führungselement (56) umfasst.

10. Scharnieranordnung (16, 16', 16") nach einem der Ansprüche 7 bis 9, wobei die Scharnieranordnung (16, 16', 16") ferner adaptiert ist, um eine Position anzunehmen, die der Motorhaube in einer aufgestellten Position (C) entspricht, wobei das Eingriffmittel (56, 66) so angeordnet ist, dass das Eingriffmittel (56, 66) in der Lage ist, mit dem anderen des ersten (24) und zweiten Scharnierelements (26) in Eingriff zu kommen, wenn es auch in der aufgestellten Position (C) ist.

11. Scharnieranordnung (16, 16', 16") nach einem der vorhergehenden Ansprüche, wobei das erste Scharnierelement (24) ferner einen zweiten nach vorne ragenden Abschnitt (58) umfasst, wobei sich der zweite Abschnitt (58) vertikal unter dem ersten Abschnitt (42) befindet, so dass eine Nut (60) durch den unteren Rand (44) des ersten Abschnitts (42) und einen oberen Rand (62) des zweiten Abschnitts (58) definiert wird.

12. Scharnieranordnung (16, 16', 16") nach Anspruch 11 in Abhängigkeit von einem der Ansprüche 4 bis 6, wobei ein hinteres Ende (64) der Nut (60) der ersten Position des zweiten Scharnierelements (26) in Bezug auf das erste Scharnierelement (24) entspricht, die verwendet wird, wenn sich die Motorhaube (12) in der geschlossenen Position (A) befindet.

13. Scharnieranordnung (16, 16', 16") nach Anspruch 11 oder 12 in Abhängigkeit von Anspruch 2, wobei das Führungselement (56) so angeordnet ist, dass es sich während der Anfangsphase des Öffnens der Motorhaube (12) in die Nut (60) bewegt, und die Nut (60) verlässt, wenn die Motorhaube (12) weiter geöffnet wird.

14. Motorhaubenanordnung (68), umfassend eine Motorhaube (12) und eine Scharnieranordnung (16, 16', 16") nach einem der vorhergehenden Ansprüche, wobei die Schwenkachse (36) der Scharnieranordnung (16, 16', 16") sich an oder vor einem hinteren Ende (18) der Motorhaube (12) befindet.

15. Fahrzeug (10), umfassend eine Motorhaube (12), eine Karosserie (20) und eine Scharnieranordnung (16, 16', 16") nach einem der Ansprüche 1 bis 13, wobei die Scharnieranordnung (16, 16', 16") eine Scharnierverbindung zwischen der Motorhaube (12) und der Karosserie (20) des Fahrzeugs (10) bereitstellt.

## Revendications

1. Agencement de charnière (16, 16', 16") pour un capot (12) d'un véhicule (10), ledit agencement de charnière (16, 16', 16") fournissant en fonctionnement une connexion articulée entre ledit capot (12) et une carrosserie (20) dudit véhicule (10), ledit agencement de charnière (16, 16', 16") comprenant :
- un premier élément de charnière (24) conçu pour être fixé, directement ou indirectement, à ladite carrosserie (20) dudit véhicule (10) ;
- un second élément de charnière (26) conçu pour être fixé, directement ou indirectement, audit capot (12) ; et
- une broche pivotante (36) ;
ledit premier élément de charnière (24) et ledit second élément de charnière (26) étant reliés de façon pivotante l'un à l'autre par ladite broche pivotante (36) établissant ladite connexion articulée ; **caractérisé en ce que** ledit premier élément de charnière (24) comprend une première partie (42) saillant dans une direction avant, une arête inférieure (44) de ladite première partie (42) étant conçue pour guider un déplacement dudit second élément de charnière (26) pendant une phase d'ouverture initiale dudit capot (12), ledit déplacement étant une combinaison d'un déplacement en translation ayant au moins une composante avant dudit second élément de charnière (26) par rapport audit premier élément de charnière (24) et un déplacement de pivotement dudit second élément de charnière (26) par rapport audit premier élément de charnière (24) autour de ladite broche pivotante (36).

2. Agencement de charnière (16, 16', 16") selon la revendication 1, dans lequel ledit second élément de charnière (26) comprend un élément de guidage (56) agencé pour être guidé par ladite arête inférieure (44) de ladite première partie (42) pendant ladite phase d'ouverture initiale dudit capot (12).

3. Agencement de charnière (16, 16', 16") selon la revendication 1 ou 2, dans lequel l'au moins un élément parmi ledit premier élément de charnière (24) et ledit second élément de charnière (26) comprend une fente allongée (46), ladite broche pivotante (36) étant agencée pour traverser ladite fente (46), ladite fente (46) permettant ledit déplacement en translation ayant au moins une composante avant dudit second élément de charnière (26) par rapport audit premier élément de charnière (24) pendant ladite phase initiale de ladite ouverture dudit capot (12), ladite fente (46) s'étendant de préférence dans une direction sensiblement longitudinale.

4. Agencement de charnière (16, 16', 16") selon la revendication 3, dans lequel ladite fente (46) fournit une première position dudit second élément de charnière (26) par rapport audit premier élément de charnière (24) utilisée lorsque ledit capot (12) est dans une position fermée (A) et une seconde position plus vers l'avant dudit second élément de charnière (26) par rapport audit premier élément de charnière (24) utilisée au moins dans ladite phase initiale de ladite ouverture dudit capot (12).

5. Agencement de charnière (16, 16', 16") selon la revendication 4, dans lequel ledit premier élément de charnière (24) et/ou ledit second élément de charnière (26) est sollicité en direction de ladite première position, de préférence sollicité au moyen d'un élément élastique (52).

6. Agencement de charnière (16, 16', 16") selon la revendication 5, dans lequel ledit élément élastique (52) s'étend entre ladite broche pivotante (36) et une fixation (54) avec ledit élément de charnière (24, 26) comprenant ladite fente (36), sollicitant ainsi ledit élément de charnière (24,26) en direction de ladite première position.

7. Agencement de charnière (16, 16', 16") selon l'une quelconque des revendications 4 à 6, dans lequel au moins un desdits premier et second éléments de charnière (24, 26) comprend des moyens de mise en prise (56, 66) agencés pour se mettre en prise avec ledit autre élément parmi lesdits premier et second éléments de charnière (24, 26) lorsque ledit second élément de charnière (26) est soumis à une force ayant au moins une composante longitudinale, de telle sorte qu'au moins une partie de ladite force puisse être transférée vers ledit premier élément de charnière (24) au moyen de ladite mise en prise, dans lequel ladite première position dudit second élément de charnière (26) par rapport audit premier élément de charnière (24) est sélectionnée de telle sorte que lesdits moyens de mise en prise (56, 66) soient à quelques millimètres d'un état de mise en prise.

8. Agencement de charnière (16, 16', 16") selon la revendication 7, dans lequel lesdits moyens de mise en prise (56, 66) sont positionnés en dessous de ladite première partie (42) dudit premier élément de charnière (24) lorsque ledit capot (12) est dans ladite position fermée (A).

9. Agencement de charnière (16, 16', 16") selon la revendication 7 ou 8, dépendant de la revendication 2, dans lequel lesdits moyens de mise en prise comprennent ledit élément de guidage (56).

10. Agencement de charnière (16, 16', 16") selon l'une quelconque des revendications 7 à 9, dans lequel ledit agencement de charnière (16, 16', 16") est en outre conçu pour prendre une position correspondant audit capot dans une position déployée (C), lesdits moyens de mise en prise (56, 66) étant agencés de telle sorte que lesdits moyens de mise en prise (56, 66) peuvent être mis en prise avec ledit autre élément parmi ledit premier (24) et ledit second élément de charnière (26), et ce également dans ladite position déployée (C).

11. Agencement de charnière (16, 16', 16") selon l'une quelconque des revendications précédentes, dans lequel ledit premier élément de charnière (24) comprend en outre une seconde partie (58) saillante vers l'avant, ladite seconde partie (58) étant positionnée verticalement en dessous de ladite première partie (42), de telle sorte qu'une rainure (60) soit définie par ladite arête inférieure (44) de ladite première partie (42) et une arête supérieure (62) de ladite seconde partie (58).

12. Agencement de charnière (16, 16', 16") selon la revendication 11 dépendant de l'une quelconque des revendications 4 à 6, dans lequel une extrémité arrière (64) de ladite rainure (60) correspond à ladite première position dudit second élément de charnière (26) par rapport audit premier élément de charnière (24) utilisé lorsque ledit capot (12) est dans ladite position fermée (A).

13. Agencement de charnière (16, 16', 16") selon la revendication 11 ou 12 dépendant de la revendication 2, dans lequel ledit élément de guidage (56) est agencé pour se déplacer dans ladite rainure (60) pendant ladite phase initiale d'ouverture dudit capot (12) et pour sortir de ladite rainure (60) lorsque ledit capot (12) est davantage ouvert.

14. Agencement de capot (68) comprenant un capot (12) et un agencement de charnière (16, 16', 16") selon l'une quelconque des revendications précédentes, dans lequel ledit axe pivot (36) dudit agencement de charnière (16, 16', 16") est positionné au niveau d'une extrémité arrière (18) dudit capot (12) ou devant elle.

15. Véhicule (10) comprenant un capot (12), une carrosserie (20) et un agencement de charnière (16, 16', 16") selon l'une quelconque des revendications 1 à 13, ledit agencement de charnière (16, 16', 16") établissant une connexion articulée entre ledit capot (12) et ladite carrosserie (20) dudit véhicule (10).
